# EUROPÄISCHE PATENTSCHRIFT

(11) **EP 2 767 459 B1**
(45) Veröffentlichungstag und Bekanntmachung des Hinweises auf die Patenterteilung: **29.05.2019**
(21) Anmeldenummer: 13004498.5
(22) Anmeldetag: 14.09.2013
(51) Int. Cl.: B62D 33/02, B62D 27/02, B62D 31/02, B62D 47/02

(54) **Rahmenstrukur für den Aufbau eines Nutzfahrzeugs**
Frame structure for the superstructure of a commercial vehicle
Structure de châssis pour le montage d'un véhicule utilitaire

(30) Priorität: 15.02.2013 DE 102013002659
(43) Veröffentlichungstag der Anmeldung: 20.08.2014
(73) Patentinhaber: MAN Truck & Bus AG, 80995 München (DE)
(72) Erfinder: Theil, Norbert, 1100 Wien (AT)
(74) Vertreter: v. Bezold & Partner Patentanwälte - PartG mbB

(56) Entgegenhaltungen:
- EP-A2- 1 908 670
- EP-A2- 2 078 665
- CN-A- 102 602 355
- DE-A1- 2 142 714
- DE-C- 894 508
- GB-A- 193 088

## Beschreibung

Die Erfindung betrifft eine Rahmenstruktur für den Aufbau eines Nutzfahrzeugs nach dem Oberbegriff des Anspruchs 1.

DE 2 142 714 offenbart eine Verbundbaukarosserie mit einer vernieteten Platte.

Aus der DE 10 2008 003719 ist eine Gerippekonstruktion eines Omnibusses bekannt, bei der gegossene oder geschmiedete mehrarmige Knoten verwendet werden. An den äußeren Rahmenenden der Knoten sind Metallprofilelemente befestigt. Heutige Reisebusse weisen über der Ebene des Kofferraums eine, Doppelstockbusse sogar zwei Ebenen mit Sitzreihen auf, wodurch die Fahrzeuge eine beträchtliche Höhe erreichen. Nachteilig ist, dass die Gerippekonstruktionen solcher Omnibusse im Fall des Umkippen oder eines Überschlags während eines Unfalls gesondert verstärkt werden müssen.

Es ist daher die Aufgabe der Erfindung, eine Rahmenstruktur für den Aufbau eines Nutzfahrzeugs zu schaffen, die der Gerippekonstruktion des Omnibusses ausreichend Stabilität verleiht.

Die Aufgabe wird erfindungsgemäß durch die Merkmale des Anspruchs 1 gelöst.

Moderne Busgerippe bestehen in der Regel aus Stahl- oder Aluminium-Vierkantrohren. Neben Vierkantrohren können aber auch Hohlprofile mit anderen Querschnitten verwendet werden. Zur Herstellung der Gerippekonstruktion werden horizontale und/oder vertikale Metallprofilelemente miteinander verschweißt. Die Metallprofilelemente werden im Bereich der Knoten zu verklebt, oder auf andere Weise verbunden. Im Stand der Technik ist es vielfach üblich, Metallprofilelemente miteinander zu verschweißen. Die Anbringung solcher Schweißnähte ist mit hohem fertigungstechnischen Aufwand verbunden, wobei eine Häufung mehrerer Schweißnähte auf engstem Raum kritisch zu betrachten ist. Im Zeitablauf später angebrachte Schweißnähte können früher angebrachte Schweißungen in ihrer Haltbarkeit und Belastbarkeit beeinträchtigen. Im Bereich eines Knotenpunktes wird das Material der Profilelemente im Schweißbereich zeitlich hintereinander wiederholt stark erhitzt, so dass bereits vorhandene Schweißarbeiten in Mitleidenschaft gezogen werden.

Zur Verstärkung der Knotenpunkte sieht die Erfindung daher vor, flächige Versteifungsplatten einzusetzen, die die Knoten überbrücken und sich dabei aneinander gegenüberliegenden Rohrprofilen abstützen. Knoten oder Knotenpunkte sind solche Bereiche in der Gerippekonstruktion des Omnibusses, in denen in unterschiedlichen Ebenen zueinander verlaufende Rohrprofile aneinander anstoßen und miteinander verbunden sind. Die Verbindung kann dabei durch Verschweißungen oder andere Verbindungsverfahren bewerkstelligt werden. Rohrprofile treffen im Knotenpunkt in unterschiedlichen Winkelabständen zusammen. Benachbarte Rohrprofile können im spitzen Winkel, im rechten Winkel, im stumpfem Winkel oder in einem gestreckten Winkel aneinander anstoßen. Denkbar ist, dass das Rohrprofil ( z.B. ein senkrecht verlaufendes Rohr) eine zentrale Stütze des Knotens bildet, wobei an dem senkrechten Rohr in einem Winkel weitere Rohrprofile anstoßen und mit der zentralen Stütze verbunden sind. Die zu der zentralen Stütze gewinkelt verlaufenden Rohrprofile berühren die zentrale Stütze mit einem Stoß. Der Knoten kann als gegossener oder geschmiedeter mehrarmiger Knoten ausgebildet sein und von seinem Zentrum beabstandete Flansche aufweisen. Jeder Flansch des Knotens ist mit dem jeweiligen Stoß eines Rohrprofils verbunden. Zur Verbindung mit dem Rohrprofil greift ein Flansch in das offene Ende des Rohrprofils ein. Eine Versteifungsplatte ist ein Blech, das in Abhängigkeit der Stärke der Rohrprofile in verschiedenen Dicken ausgeführt ist. Die Versteifungsplatte überspannt das Zentrum des Knotens, in dem die Rohrprofile im Winkelabstand aufeinander treffen. Mit ihren einander gegenüberliegenden Kanten lehnt sich die Versteifungsplatte jeweils an einem Rohrprofil an. Die Versteifungsplatte ist an Ihren freien Kanten zu den einzelnen Rohrprofilen hin abgewinkelt. Im Bereich der in sich abgewinkelten Rändern weist die Versteifungsplatte jeweils Ausnehmungen auf, die formschlüssig am Rohrprofil anliegen. Die Ausnehmungen sind an den jeweiligen Außenumfang des Rohrprofils angepasst und im Formschluss mit dem jeweiligen Rohrprofil verschweißt.

Eine andere Ausführungsform der Erfindung sieht vor, dass die Versteifungsplatte an der konkaven Seite des Knotens angeordnet ist. Diese Form der Anordnung dient der Versteifung und der weiteren Abstützung des Knotens durch die Versteifungsplatte.

Nach einer weiteren Ausführungsform der Erfindung umfasst der abgewinkelte Rand der Versteifungsplatte in Anlage am jeweiligen Rohrprofil das Rohrprofil über einen Bereich von etwa 180 Grad. Der Grad der Umfassung ist dabei nur beispielhaft gemeint, sodass der abgewinkelte Rand der Versteifungsplatte das jeweilige Rohrprofil auch über einen Bereich von unter 180 Grad oder über 180 Grad umgreifen kann.

In einer zusätzlichen Ausführungsform der Erfindung ist der Rand der Ausnehmung stoffschlüssig mit dem Rohrprofil verbunden.

Eine weitere Ausführungsform der Erfindung sieht vor, dass die Fläche der Versteifungsplatte Gewicht sparende Ausnehmungen aufweist.

Weitere Merkmale, Einzelheiten und Vorteile der Erfindung ergeben sich aus der folgenden Beschreibung, verschiedener Ausführungsformen der Erfindung sowie anhand der Zeichnung. Hierbei zeigen:
- Figur 1: die erfindungsgemäße Versteifungsplatte mit abgewinkelten Bereichen,
- Figur 2: die Versteifungsplatte entsprechend Figur 1 an runden Rohrprofilen,
- Figur 3: die Versteifungsplatte entsprechend die Figur 2, seitlich von hinten gesehen,
- Figur 4: die Versteifungsplatte entsprechend Figur 2 aus Vorderansicht,
- Figur 5: die Versteifungsplatte, seitlich geschnitten,
- Figur 6: die erfindungsgemäße Versteifungsplatte mit einer zusätzlichen Gewicht sparenden Ausnehmung und
- Figur 7: die Versteifungsplatte nach Figur 6 in perspektivischer Darstellung von hinten gesehen.

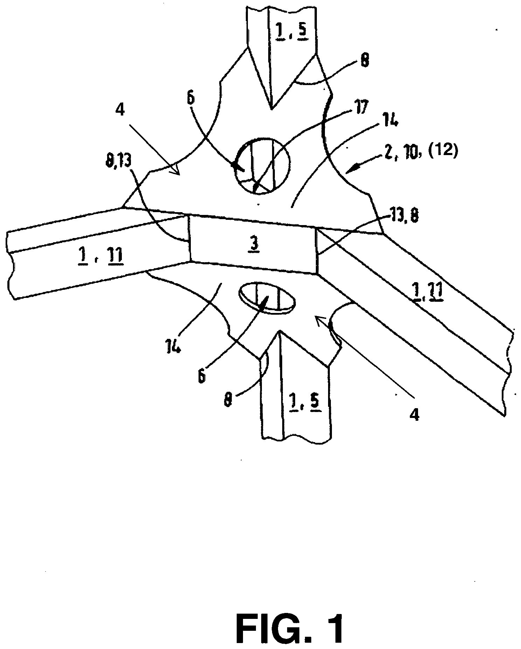

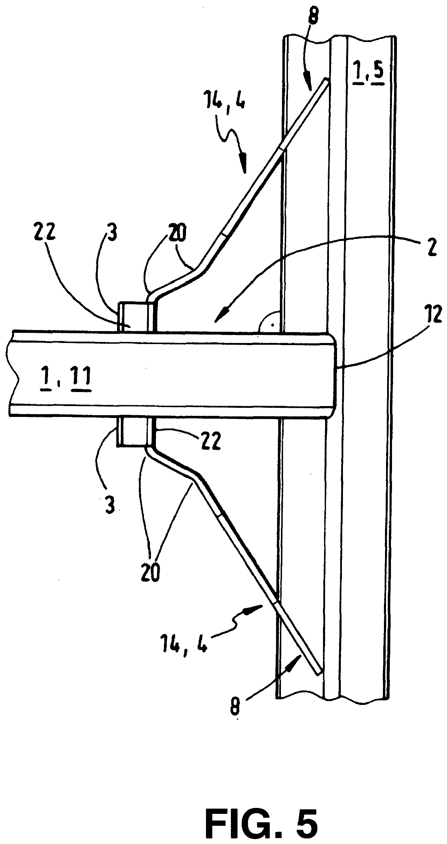

Figur 1 zeigt gewinkelt zueinander verlaufende Rohrprofile 1, die in einem Knoten 2 aneinander stoßen und dort miteinander verbunden sind. In Figur 1 weisen die Rohrprofile 1 einen rechteckigen Querschnitt auf. Eine flächige Versteifungsplatte 3 überbrückt mit einem Abstand 17 zu dem Knoten 2 die Rohrprofile 1 in einem gegenseitigen Verbindungsbereich 10. Die Rohrprofile 1; 11 sind über ihren jeweiligen Stoß 12 (Fig. 5) mit einem in Figur 1 senkrecht verlaufenden, einteiligen Rohrprofil 1; 5 verbunden. Mit Ihren freien Rändern 13 liegt die Versteifungsplatte 3 an einander gegenüberliegenden Rohrprofilen 11 an. Gegenüber der Versteifungsplatte 3 abgewinkelt ausgebildete Bereiche 14 sind zu einzelnen Rohrprofilen 5 hin geneigt ausgeführt. Am Außenrandbereich 4 der abgewinkelten Bereiche 14 der Versteifungsplatte 3 sind Ausnehmungen 8 eingebracht, die in ihrer Kontur zumindest bereichsweise dem Außenumfang des Rohrprofils 1; 11; 5 entsprechen. In den abgewinkelten Bereichen 14 der Versteifungsplatte 3 sind in Figur 1 zur Gewichtsreduzierung zusätzliche Ausnehmungen 6; 8 vorgesehen. Außer in den abgewinkelten Bereichen 14 können die Ausnehmungen 6; 8 auch in der Versteifungsplatte 3 vorgesehen sein und der Durchführung eines weiteren Rohrprofils (hier nicht dargestellt) dienen, das mit wenigstens einem der Rohrprofile 1; 11; 5 verbunden ist. Zum Schutz und zur Führung werden Kabelstränge, Leitungen oder andere Strukturelemente durch die Ausnehmungen 6; 8 hindurchgeführt und zumindest bereichsweise von der Versteifungsplatte 3 und ihren Bereiche 14 abgeschirmt.

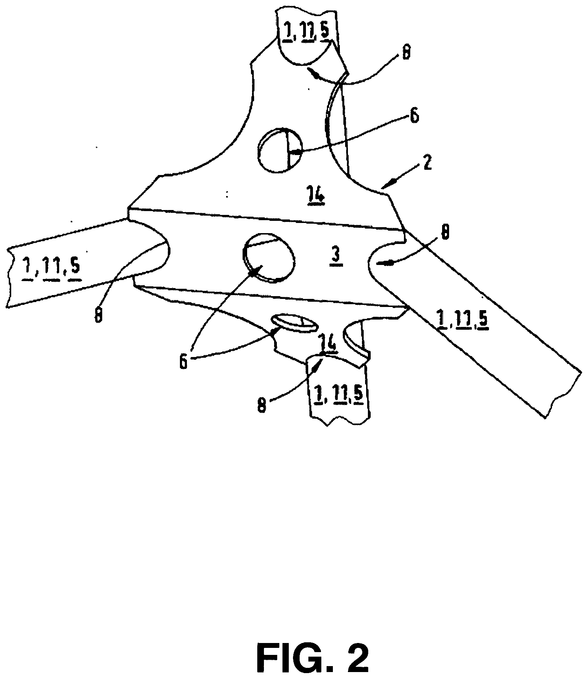

Figur 2 zeigt eine Versteifungsplatte 3 entsprechend der Figur 1, deren Ausnehmungen 6; 8 sich an Rohrprofile 1; 11; 5 anschmiegen, wobei die Kontur der Ausnehmung 6; 8 an die Kontur des Rohrprofils 1; 11; 5 angepasst ist. Zu beiden Seiten der Versteifungsplatte 3 sind in Figur 2 abgewinkelte Bereiche 14 dargestellt, die Ausnehmungen 6; 8 aufweisen, durch die ein Zugang zum Knoten 2 der Rohrprofile 1; 11; 5 möglich ist. Im Unterschied zur vorausgegangen Figur 1 sind die Ausnehmungen 6; 8 entsprechend dem kreisförmigen Querschnitt der Rohrprofile 1: 11; 5 wenigstens halbkreisförmig ausgebildet.

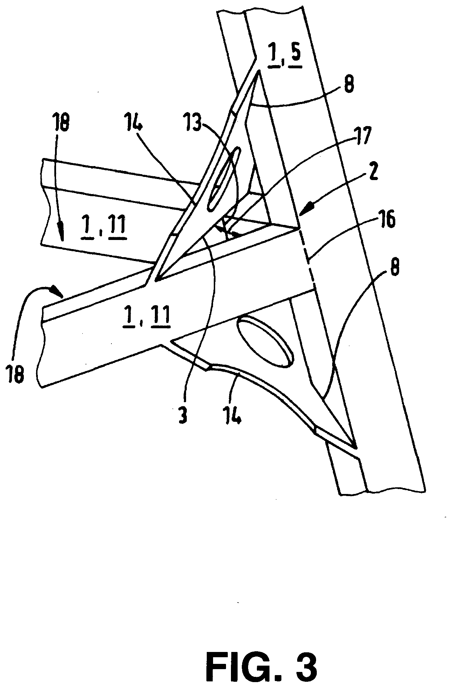

Figur 3 zeigt in perspektivischer Darstellung seitlich von hinten gesehen die Versteifungsplatte 3 entsprechend Figur 1. Die Rohrprofile 1; 11; 5 verlaufen in etwa rechtwinklig zum einstückig ausgebildeten Rohrprofil 1; 5. Das im Vordergrund erkennbare Rohrprofil 1; 11 liegt mit einem Stoß 16 (gestrichelt dargestellt) am Rohrprofil 1; 5 an. Mit Abstand 17 zum Knoten 2 überspannt die Versteifungsplatte 3 die Rohrprofile 1; 11; 5 wobei sich die Versteifungsplatte 3 mit Ihren beiden freien Rändern 13 an Innenseiten 18 der Rohrprofile 1; 11 anlegt. Die abgewinkelten Bereiche 14 verlaufen in einem Winkel (nicht dargestellt) zur Versteifungsplatte 3. Die Ausnehmungen 6; 8 der abgewinkelten Bereiche 14 der Versteifungsplatte 3 sind in Ihrer Form zumindest bereichsweise dem Außenumfang des jeweiligen Rohrprofils 1; 11; 5 angepasst und mit diesem formschlüssig verbunden.

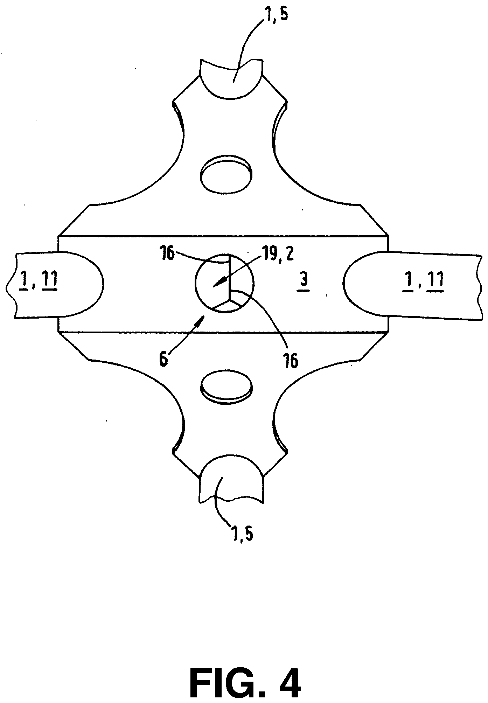

Figur 4 zeigt in Vorderansicht die Versteifungsplatte 3 entsprechend der Figur 2. Durch die in der Versteifungsplatte 3 vorgesehenen Ausnehmung 6; 8 ist ein Zentrum 19 des Knotens 2 erkennbar. Die Rohrprofile 1; 5; 11 sind an Ihren Stößen 16 miteinander verbunden.

Figur 5 zeigt einen seitlichen Schnitt durch die erfindungsgemäße Versteifungsplatte 3 mit ihren abgewinkelten Bereichen 14. In der Figur 5 sind die Rohrprofile 1; 5 und 1; 11 in etwa in einem Winkel von 90 Grad zu einander angeordnet. Über seinen Stoß 12 ist das Rohrprofil 1; 11 mit dem Rohrprofil 1; 5 verbunden. Die Rohrprofile 1; 11 und 5 weisen in Figur 5 einen etwa rechtwinkligen Querschnitt auf, dabei ragt das Rohrprofil 1; 5 in die Ausnehmung 6; 8 des Außenrandbereichs 4 des abgewinkelten Bereiches 14 der Versteifungsplatte 3 hinein. Zur Versteifung des Knotens 2 sind in die abgewinkelten Bereiche 14 der Versteifungsplatte 3 Sicken 20 eingebracht. In Figur 5 ist die Versteifungsplatte 3 doppelwandig ausgeführt, indem neben der Versteifungsplatte 3 eine innere zweite Wand 22 vorgesehen ist. Die zweite Wand 22 verläuft in der Ebene einer Sicke 23 knotenseitig hinter der Versteifungsplatte 3.

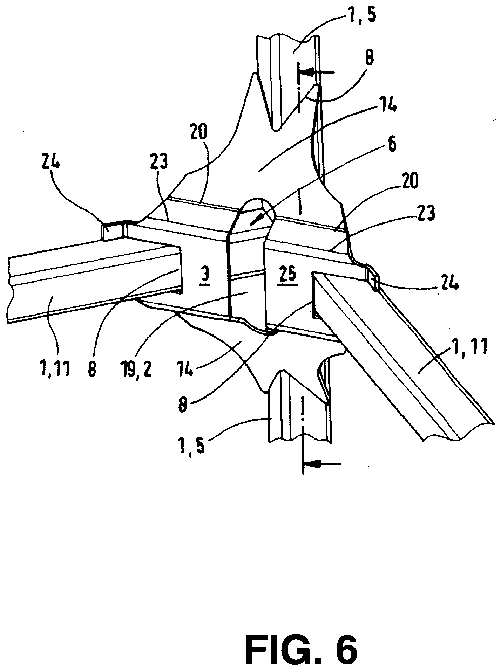

Figur 6 zeigt die erfindungsgemäße Versteifungsplatte 3 mit einer zusätzlichen Gewicht sparenden Ausnehmung 6; 8. Die Rohrprofile 1; 5 und 11 weisen einen etwa rechteckigen Querschnitt auf und sind im Zentrum 19 des Knotens 2 miteinander verbunden. Die Ausnehmung 6; 8 verläuft in etwa achsparallel zum Rohrprofil 1; 5 und erstreckt sich über die Versteifungsplatte 3 zu beiden Seiten in die abgewinkelten Bereiche 14 hinein. In die abgewinkelten Bereiche 14 der Versteifungsplatte 3 sind Sicken 20 eingebracht, die der Versteifung der Rahmenstruktur dienen. In Fig. 6 greifen die Rohrprofile 1; 11 in die Ausnehmungen 6; 8 der Versteifungsplatte 3 hinein, wobei die Versteifungsplatte 3 Verlängerungen 24 aufweist, die aus einer Ebene 25 der Versteifungsplatte 3 herausragen und in etwa achsparallel zu den Rohrprofilen 1; 11 verlaufen.

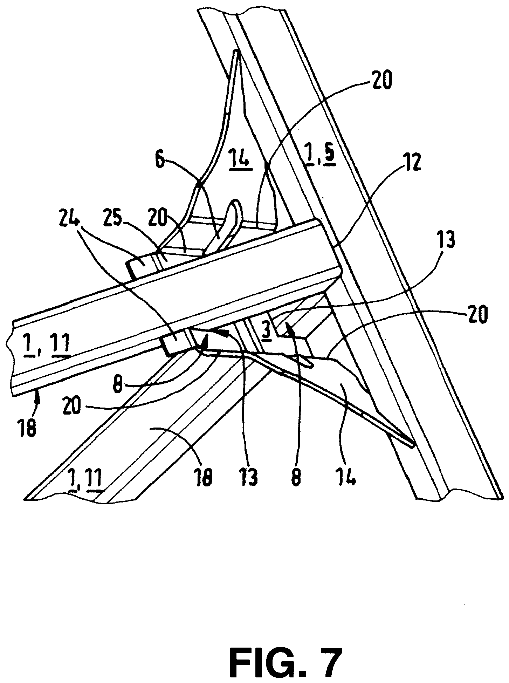

Figur 7 bezieht sich auf Figur 6 und zeigt die Versteifungsplatte 3 in perspektivischer Darstellung von hinten. Die Rohrprofile 1; 11 sind über Ihre Stöße 12 in rechtwinkliger Anordnung mit dem Rohrprofil 1; 5 verbunden. Mit Ihren freien Rändern 13 lehnt sich die Versteifungsplatte 3 an die Innenseiten 18 der Rohrprofile 1; 11 an. Dabei ragen die Rohrprofile 1; 11 in die Ausnehmungen 6; 8 der Versteifungsplatte 3 hinein, wobei die Rohrprofile 1; 11 mit der Versteifungsplatte 3 verschweißt sind. In der Figur 7 ist eine Ausnehmung 6; 8 erkennbar, die die Versteifungsplatte 3 senkrecht schneidet und über diese hinaus in die abgewinkelten Bereiche 14 der Versteifungsplatte 3 hineinragt. Die Ausnehmung 6; 8 verläuft in etwa rechtwinklig zu den Sicken 20, die in etwa achsparallel zur Versteifungsplatte 3 angeordnet sind. Die Verlängerungen 24 der Versteifungsplatte 3 ragen aus der Ebene 25 der Versteifungsplatte 3 heraus und verlaufen axial zu den Rohrprofilen 1; 11.

### Bezugszeichen

1; 5 Rohrprofil
2 Knoten
3 Versteifungsplatte
4 Außenrandbereich der Versteifungsplatte
6 Ausnehmung
7
8 Ausnehmung
9
10 Verbindungsbereich
11 Rohrprofil
12 Stoß
13 freier Rand der Versteifungsplatte
14 abgewinkelter Bereich der Versteifungsplatte
15 frei bleibend
16 Stoß
17 Abstand
18 Innenseite der Rohrprofile 1; 11; 5
19 Zentrum des Knotens
20 Sicke
21
22 Zweite Wand
23 Sicke
24 Verlängerung
25 Ebene Versteifungsplatte

## Patentansprüche

1. Rahmenstruktur für den Aufbau eines Nutzfahrzeugs, bei welcher mehrere Rohrprofile (1; 11; 5) im Winkelabstand zu einander zu einem Knoten (2) aufeinander treffen und miteinander verbunden sind, umfassend eine, den Knoten (2) überbrückende flächige Versteifungsplatte (3), deren Außenrandbereich (4) über den einzelnen Rohrprofilen (1; 5) zu diesen hin abgewinkelt ist und die zumindest in dem abgewinkelten Außenrandbereich (4) zumindest eine sich an das Rohrprofil (1; 5) formschlüssig anlegende Ausnehmung (6; 8) aufweist, die an dem Rohrprofil (1; 5) befestigt ist, **dadurch gekennzeichnet, dass** sich die Versteifungsplatte (3) mit ihren einander gegenüberliegenden Kanten jeweils an einem Rohrprofil (1; 5) anlehnt und/oder in abgewinkelten Bereichen (14) der Versteifungsplatte (3) Sicken eingebracht sind.

2. Rahmenstruktur nach Anspruch 1, **dadurch gekennzeichnet, dass** die Versteifungsplatte (3) an einer konkaven Seite des Knotens (2) angeordnet ist.

3. Rahmenstruktur nach den Ansprüchen 1 und 2, **dadurch gekennzeichnet, dass** der abgewinkelte Außenrandbereich (4) das jeweilige Rohrprofil (1; 5) über einen Bereich von etwa 180° umfasst.

4. Rahmenstruktur nach den Ansprüchen 1 bis 3, **dadurch gekennzeichnet, dass** der Außenrandbereich (4) der Ausnehmung (6; 8) stoffschlüssig mit dem Rohrprofil (1; 5) verbunden ist.

5. Rahmenstruktur nach den Ansprüchen 1 bis 4, **dadurch gekennzeichnet, dass** die Versteifungsplatte (3) zwecks Gewichtsreduzierung zumindest eine zusätzliche Ausnehmung (6; 8) aufweist.

6. Nutzfahrzeug mit einer Rahmenstruktur gemäß einem der vorhergehenden Ansprüche 1 bis 5.

## Claims

1. Frame structure for the construction of a commercial vehicle where several tubular profiles (1; 11; 5) meet one another at an angular spacing with respect to one another to form a node (2) and are connected together, comprising a flat reinforcement plate (3) which bridges the node, the outside edge region (4) of said reinforcement plate being angled over the individual tubular profiles (1; 5) toward the same and which, at least in the angled outside edge region (4), has at least one recess (6; 8) which abuts against the tubular profile (1; 5) in a form-fitting manner and is fastened on the tubular profile (1; 5), **characterized in that** the reinforcement plate (3) leans by way of its edges lying opposite one another in each case against a tubular profile (1; 5) and/or beads are introduced into angled regions (14) of the reinforcement plate (3).

2. Frame structure according to Claim 1, **characterized in that** the reinforcement plate (3) is arranged on a concave side of the node (2).

3. Frame structure according to Claims 1 and 2, **characterized in that** the angled outside edge region (4) includes the respective tubular profile (1; 5) over a region of approximately 180°.

4. Frame structure according to Claims 1 to 3, **characterized in that** the outside edge region (4) of the recess (6; 8) is connected in a positively-bonding manner to the tubular profile (1; 5).

5. Frame structure according to Claims 1 to 4, **characterized in that** the reinforcement plate (3) has at least one additional recess (6; 8) for the purposes of weight reduction.

6. Commercial vehicle having a frame structure according to one of the preceding Claims 1 to 5.

## Revendications

1. Structure de châssis, destinée à la construction d'un véhicule utilitaire, dans laquelle une pluralité de profilés tubulaires (1 ; 11 ; 5) convergent angulairement et sont reliés entre eux pour former un noeud (2), la structure de châssis comprenant une plaque de renforcement (3) sensiblement bidimensionnelle qui couvre le noeud (2) et dont la région de bord extérieure (4) est coudée sur les profilés de tube individuels (1 ; 5) en direction de ceux-ci et qui comporte au moins un évidement (6 ; 8) qui, au moins dans la région de bord extérieure coudée (4), vient en appui sur le profil tubulaire (1 ; 5) par complémentarité de formes et qui est fixé au profilé tubulaire (1 ; 5), **caractérisé en ce que** la plaque de renforcement (3) s'appuie, avec chacun de ses bords opposés, sur un profilé tubulaire (1 ; 5) et/ou **en ce que** des moulures sont introduites dans des régions coudées (14) de la plaque de renforcement (3).

2. Structure de châssis selon la revendication 1, **caractérisée en ce que** la plaque de renforcement (3) est disposée sur un côté concave du noeud (2).

3. Structure de châssis selon les revendications 1 et 2, **caractérisée en ce que** la région de bord extérieure coudée (4) comprend le profilé tubulaire respectif (1 ; 5) sur une plage d'environ 180°.

4. Structure de châssis selon les revendications 1 à 3, **caractérisée en ce que** la région de bord extérieure (4) de l'évidement (6 ; 8) est reliée par liaison de matière au profilé tubulaire (1 ; 5).

5. Structure de châssis selon les revendications 1 à 4, **caractérisée en ce que** la plaque de renforcement (3) comporte au moins un évidement supplémentaire (6 ; 8) dans le but de réduire le poids.

6. Véhicule utilitaire comprenant une structure de châssis selon l'une des revendications précédentes 1 à 5.
